Europäisches Patentamt

European Patent Office

Office européen des brevets

(19)

(11)  EP 0 761 955 A2

(12)  **EUROPÄISCHE PATENTANMELDUNG**

(43) Veröffentlichungstag:
  **12.03.1997 Patentblatt 1997/11**

(51) Int. Cl.$^6$: **F02D 43/00**, F02D 33/02,
   F02B 33/44, F02B 39/12

(21) Anmeldenummer: 96111918.7

(22) Anmeldetag: **24.07.1996**

(84) Benannte Vertragsstaaten:
  **DE FR GB IT**

(30) Priorität: **11.09.1995 DE 19533333**

(71) Anmelder: **MERCEDES-BENZ AG**
  **70327 Stuttgart (DE)**

(72) Erfinder:
  • **Volkmann, Hans-Joachim**
    **70619 Stuttgart (DE)**
  • **Bernd, Hans-Hermann**
    **70794 Filderstadt (DE)**
  • **Widmann, Wolfgang**
    **71729 Erdmannhausen (DE)**
  • **Kemmler, Roland**
    **70619 Stuttgart (DE)**

(54)    **Verfahren zur Steuerung einer aufgeladenen Brennkraftmaschine**

(57)    Die Erfindung bezieht sich auf ein Verfahren zur Steuerung einer aufgeladenen Brennkraftmaschine eines Kraftfahrzeuges, die eine Motorsteuerung und einen Lader zur Förderung von Ladeluft umfaßt, wobei der Lader in Abhängigkeit von Betriebsparametern der Brennkraftmaschine über eine Kupplung zu-und abschaltbar ist und in einer Ladeluftleitung stromauf einer Drosselklappe und stromab des Laders eine Umluftleitung zur Saugseite des Laders abzweigt und in der Umluftleitung ein Umluftsteller angeordnet ist und wobei die Motorsteuerung eine Vielzahl von Sensorwerten über Leitungen erhält und verarbeitet, in Steuerdaten für den Betrieb der Brennkraftmaschine umwandelt und über Zuleitungen an diese weiterleitet. Um mit einem derartigen Verfahren auf möglichst einfache Art und Weise eine Vielzahl unterschiedlicher Betriebszustände der Brennkraftmaschine zu steuern, wird **erfindungsgemäß** vorgeschlagen, daß über die Motorsteuerung in Abhängigkeit von Betriebsparametern der Brennkraftmaschine und/oder des Kraftfahrzeuges der Umluftsteller und/oder die Laderkupplung mit vorgebbaren Werten für einen Öffnungsgrad des Umluftstellers und/oder einen Schaltzustand der Laderkupplung für vorgebbare unterschiedliche Betriebszustände der Brennkraftmaschine angesteuert werden.

Fig. 1

EP 0 761 955 A2

# Beschreibung

Die Erfindung bezieht sich auf ein Verfahren zur Steuerung einer aufgeladenen Brennkraftmaschine gemäß dem Oberbegriff des Patentanspruchs 1.

Aus der DE 35 06 235 A1 ist bereits eine Steuerung eines Ladeluftstromes für eine aufgeladene Brennkraftmaschine der bekannt. Diese umfaßt einen Lader zur Förderung von Ladeluft über eine Ladeluftleitung zur Brennkraftmaschine, wobei in der Ladeluftleitung eine Drosselklappe angeordnet ist und aus der Ladeluftleitung stromauf der Drosselklappe und stromab des Laders eine Umluftleitung abzweigt, die zur Saugseite des Laders führt und in der ein Umluftsteller angeordnet ist. Desweiteren befindet sich eine Verbindungsleitung zwischen der Druckseite des Laders und einer Abgasleitung der Brennkraftmaschine, wobei eine in die Abgasleitung eingeblasene Sekundärluftmenge über ein in der Verbindungsleitung angeordnetes Regelventil einstellbar ist und wobei dieses über ein Motor-Steuergerät angesteuert wird. Die Motorsteuerung ist ferner mit einer Einspritzanlage und einer Sauerstoffsonde in der Abgasanlage der Brennkraftmaschine verbunden. Die Umluftklappe ist über ein Gestänge mit der Drosselklappe derart verbunden, daß die Umluftklappe bei voll geöffneter Drosselklappe geschlossen und bei geschlossener Drosselklappe geöffnet ist.

Zum allgemeinen technischen Hintergrund wird noch auf die Druckschrift DE-OS 32 46 855 A1, DE 35 12 281, DE 41 03 747 A1 und DE 41 10 599 C2 verwiesen.

Der Erfindung liegt die Aufgabe zugrunde, ein Verfahren zur Steuerung einer aufgeladenen Brennkraftmaschine anzugeben, mit dem auf möglichst einfache Art und Weise eine Vielzahl unterschiedlicher Betriebszustände der Brennkraftmaschine steuerbar ist.

Die Aufgabe wird erfindungsgemäß durch die im Kennzeichen des Hauptanspruches gegebenen Merkmale gelöst.

Ein Vorteil des erfindungsgemäßen Verfahrens liegt darin, daß lediglich über die Ansteuerung des Umluftstellers und/oder der Laderkupplung in Abhängigkeit von Betriebsparametern der Brennkraftmaschine und/oder des Kraftfahrzeuges eine Vielzahl von unterschiedlichen Betriebszuständen der Brennkraftmaschine auf einfache und eine den Fahrkomfort steigernde Weise beeinflußbar sind.
Mögliche Betriebszustände der Brennkraftmaschine sind beispielsweise Tempomatbetrieb, Erkennung mindestens eines klopfenden Zylinders, Höchstgeschwindigkeitsregelung, aktivierte Sekundärluftzuführung in den Abgasstrom, Momentenreduktion bei Fahrdynamik-Systemen, Selbstdiagnose, etc.
Betriebsparameter der Brennkraftmaschine bzw. des Kraftfahrzeuges, die über Sensoren nebst Zuleitungen an die Motorsteuerung weitergeleitet werden, sind beispielsweise Fahrzeuggeschwindigkeit, Soll-Fahrzeuggeschwindigkeit bei Tempomatbetrieb, erkanntes Motorklopfen, Luftmasse, Drosselklappenstellung oder eine E-Gas-Position, Motordrehzahl, Motortemperatur, Leerlaufkontakt und Soll-Drehmoment bei Fahrdynamik-Systemen.

Ein Vorteil der erfindungsgemäßen Ausgestaltung nach Anspruch 2 liegt darin, daß im Tempomatbetrieb ein durch das Trägheitsmoment des Laders und durch das Ein- und Ausschalten der Laderkupplung verursachtes und für Insassen des Fahrzeuges spürbares Ein- und Ausschaltrucken vermieden wird.

Durch die Ausgestaltung der Erfindung nach Anspruch 3 wird bei erkanntem Klopfen eines/mehrerer Zylinder in Abhängigkeit von der Zündzeitpunktverschiebung in Richtung "spät" der Umluftklappenwinkel reduziert, dh. die Umluftklappe geöffnet. Bei einer aufgrund der Anti-Klopf-Regelung gebildeten Spätverstellung wird der Wert für die Reduktion der Öffnung des Umluftstellers aus einem arithmetische Mittel über alle Zylinder gewonnen oder kann bei einer adaptiven Anti-Klopf-Regelung auch auf andere Weise ermittelt werden.

Ein Vorteil der Ausgestaltung der Erfindung nach Anspruch 5 liegt darin, daß bei Fahrzustandsübergängen von "Zug" (Fahrzeug wird vom Motor angetrieben) in Richtung "Schub" (Motor wird vom Fahrzeug zwangsgetrieben) der Aufbau von Druckspitzen im Saugrohr verhindert wird.

Durch die erfindungsgemäße Ausgestaltung nach Anspruch 6 wird beim Übergang vom "Schubbetrieb" in den "Zugbetrieb" der Einschaltruck der Laderkupplung vermindert, indem die Laderkupplung definitiv erst nach dem Wiedereinsetzen der Verbrennung aktiviert wird. Alternativ hierzu kann der Einschaltruck über eine stromgeregelte Endstufe für die Laderkupplung oder bei Verwendung eines Drive-by-Wire-Systems über die definierte Beeinflussung des Drosselklappenwinkels erfolgen.

Weitere Ausgestaltungen und Vorteile der Erfindung gehen aus den übrigen Unteransprüchen und der Beschreibung hervor.

Im folgenden wird die Erfindung anhand von in den Zeichnungen dargestellten Ausführungsbeispielen näher erläutert. Dabei zeigt:

Fig. 1 eine Prinzipzeichnung einer Vorrichtung zur Durchführung des Verfahrens, die eine Brennkraftmaschine, einen Lader, eine Motorsteuerung, eine Umluftleitung zwischen Druckseite und Saugseite des Laders, einen in der Umluftleitung angeordneten Umluftsteller sowie eine Verbindungsleitung von der Druckseite des Laders zur Abgasleitung der Brennkraftmaschine umfaßt,

Fig. 2 eine Prinzipzeichnung der Motorsteuerung aus Fig. 1 mit Eingangs- und Ausgangssignalen,

Fig. 3 in einem ersten Beispiel des Verfahrens ein Flußdiagramm für eine Regelung der Laderkupplung bei Tempomatbetrieb,

Fig. 4　in einem zweiten Beispiel des Verfahrens ein Flußdiagramm für eine Steuerung eines Öffnungswinkels des Umluftstellers bei einer Höchstgeschwindigkeitsregelung,

Fig. 5　in einem dritten Beispiel des Verfahrens ein Diagramm für das Zuschalten der Laderkupplung beim Übergang von Schubabschaltung zu motorgetriebenen Fahrbetrieb,

Fig. 6　in einem vierten Beispiel des Verfahrens ein Flußdiagramm für eine Steuerung des Öffnungswinkels des Umluftstellers bei Sekundärluftpumpenfunktion und

Fig. 7　in einem fünften Beispiel des Verfahrens ein Diagramm für einen Momentenverlauf in Abhängigkeit von der Drehzahl der Brennkraftmaschine für geschlossene und offene Umluftklappe.

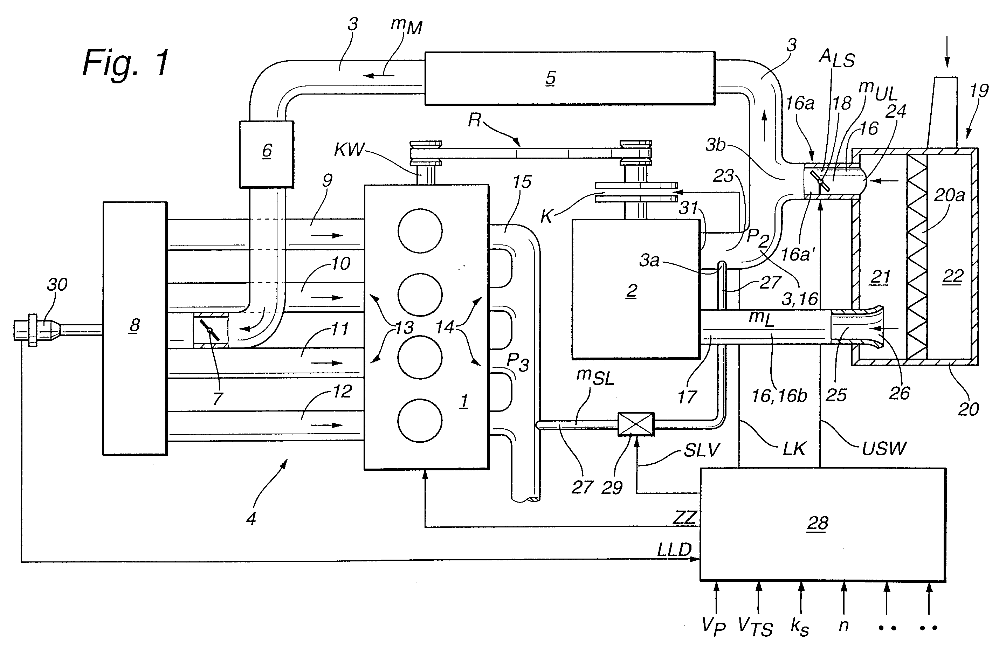

In Fig. 1 ist zum besseren Verständnis des Verfahrens zunächst in einer Prinzipzeichnung eine Vorrichtung zur Durchführung des Verfahrens näher erläutert. Fig. 1 zeigt eine Vorrichtung zur Steuerung des Ladeluftstromes für eine aufgeladene Brennkraftmaschine 1 mit einem Lader 2 zur Förderung von Ladeluft über eine Ladeluftleitung 3 zu einer Saugrohranlage 4 der Brennkraftmaschine 1. Der Lader 2 wird über eine Keilriemenverbindung R nebst mechanischer Kupplung K von einer Kurbelwelle KW der Brennkraftmaschine 1 angetrieben.

In der Ladeluftleitung 3 ist stromab des Laders 2 ein Ladeluftkühler 5, ein Luftmassenmesser 6 sowie eine Drosselklappe 7 angeordnet. Die Ladeluftleitung 3 mündet in einen Sammelraum 8 der Saugrohranlage 4, von dem einzelne Saugrohre 9, 10, 11 und 12 zur Einlaßseite 13 der Brennkraftmaschine 1 führen. Dabei ist der Luftmassenmesser 6 stromab des Ladeluftkühlers 5 und stromauf der Drosselklappe 7 in der Ladeluftleitung 3 angeordnet.

Von der Auslaßseite 14 der Brennkraftmaschine 1 führt eine Abgasleitung 15 zu einer nicht näher dargestellten Abgasanlage der Brennkraftmaschine 1.

Stromab des Laders 2 führt eine Umluftleitung 16 zur Saugseite 17 des Laders 2, wobei in der Umluftleitung 16 ein Umluftsteller 18 angeordnet ist. Die Umluftleitung 16 umfaßt im gezeigten Beispiel Umluftleitungsteile 16a und 16b sowie ein Luftfilter 19 nebst Luftfiltergehäuse 20 und Filter 20a, der das Luftfilter 19 in eine Reinluftseite 21 und Rohluftseite 22 teilt. Die Ladeluftleitung 3 auf der Saugseite 17 des Laders 2 und die von dessen Druckseite 23 abzweigende Umluftleitung 16 ist mit dem Luftfiltergehäuse 20 verbunden, wobei eine Einmündung 24 der Umluftleitung 16 und eine Ausmündung 25 der Ladeluftleitung 3 des Laders 2 auf der Reinluftseite 21 des Luftfiltergehäuses 20 angeordnet ist. Der Umluftstrom passiert also das Luftfilter 19 auf der Reinluftseite 21. An der Ausmündung 25 des Umluftleitungsteils 16b aus dem Luftfiltergehäuse 20 ist ein strömungsgünstiger Einlauf 26 für den angesaugten Ladeluftstrom angeformt.

Von einer Abzweigung 3a der Ladeluftleitung 3 auf der Druckseite 23 des Laders 2 führt eine Verbindungsleitung 27 zur Abgasleitung 15 der Brennkraftmaschine 1, wobei in der Verbindungsleitung 27 ein mit einem Motor-Steuergerät 28 verbundenes Regelventil 29 angeordnet ist. Die Abzweigung 3a ist stromauf einer Abzweigung 3b der Umluftleitung 16 in der Ladeluftleitung 3 angeordnet.

Der Umluftsteller 18 besitzt eine sehr kurze Verstellzeit, die von der geöffneten Position in die geschlossene Position des Umluftstellers 18 und umgekehrt in etwa 50 bis 100 Millisekunden beträgt. Im gezeigten Beispiel ist der Umluftsteller 18 direkt am Luftfiltergehäuse 20 angeordnet. Der Umluftsteller 18 ist fein dosierbar und beispielsweise als Klappe, Flachschieber oder Drehschieber ausführbar. Ferner besitzt der Umluftsteller 18 einen eigenen, nicht dargestellten und von dem Motor-Steuergerät 28 angesteuerten Elektromotor als Verstelleinrichtung zur Realisierung der sehr kurzen Verstellzeiten (dabei ist die Elektronik des integrierten Lageregelkreises des Umluftstellers direkt an diesem angeordnet).

Desweiteren besitzt der Umluftsteller 18 eine Einrichtung zur Langzeitadaption, indem ein in Abhängigkeit von Last und Drehzahl vollständiges Kennfeld der Stellung des Klappenwinkels des Umluftstellers 18 in dem Motor-Steuergerät 28 abgelegt ist und die sich während der Motorlebensdauer verändernden Anschläge des Umluftstellers 18 in einem EEPROM (elektronisch löschbarer und programmierbarer Speicher) gespeichert sind.

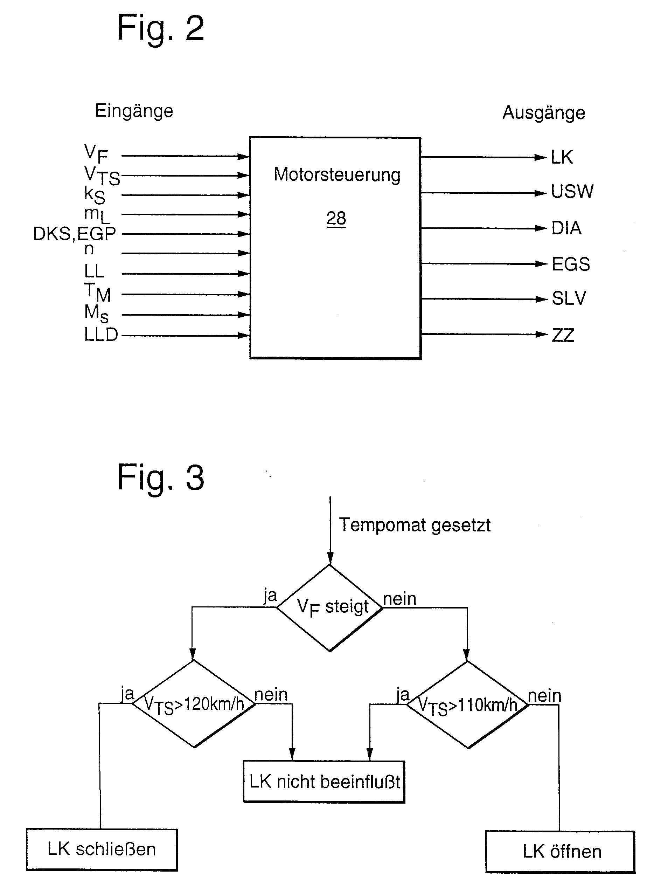

Die Motorsteuerung 28 (siehe auch Fig. 2) empfängt und verarbeitet eine Vielzahl von Sensorwerten, die in Steuerdaten für den Betrieb der Brennkraftmaschine 1 umgewandelt und über Zuleitungen an diese weiterleitet werden. Die Motorsteuerung 28 steuert in Abhängigkeit von Betriebsparametern der Brennkraftmaschine und/oder des Kraftfahrzeuges einen Öffnungsgrad USW des Umluftstellers 18 (= Öffnungswinkel bei Umluftklappen) und/oder einen Schaltzustand LK der Laderkupplung K für vorgebbare unterschiedliche Betriebszustände der Brennkraftmaschine 1 auf vorgebbare Werte an.

Folgende Sensorwerte werden vom Motor-Steuergerät 28 empfangen: eine Fahrgeschwindigkeit $v_F$, eine Tempomat-Sollgeschwindigkeit $v_{TS}$, ein erkanntes Klopfen eines/mehrerer Zylinder der Brennkraftmaschine $k_S$, einen Luftmassenstrom $m_L$, eine Drosselklappenstellung DKS bzw. bei vorhandenem E-Gas eine E-Gasposition EGP, eine Motordrehzahl n, ein Leerlaufkontakt LL, eine Motortemperatur (Kühlwassertemperatur) $T_M$ und ein Solldrehmoment $M_S$. Desweiteren kann die Motorsteuerung auch noch mit einem Drucksensor 30 verbunden sein, wobei der Drucksensor 30 den Ladeluftdruck LLD im Sammelraum 8 der Saugrohranlage 4 mißt.

Nach Verarbeitung der Eingangsdaten überträgt das Motor-Steuergerät 28 über entsprechende Leitungen Werte SLV für eine Sekundärluftfunktion zum Regelventil 29 (öffnen/schließen des Ventils), Werte für den Öffnungsgrad USW des Umluftstellers 18 (z.B. Umluftklappenwinkel), Werte LK (öffnen/schließen) für die Laderkupplung K und Werte ZZ für eine Zündverstellung der Brennkraftmaschine 1 sowie Werte EGS für eine Korrektur des E-Gasstellers und Werte DIA für eine Selbstdiagnose des Systems.

Im folgenden sind einige Beispiele für die Steuerung des Umluftstellers 18 und/oder der Laderkupplung K in Abhängigkeit von verschiedenen Betriebszuständen der Brennkraftmaschine angegeben.

So zeigt Fig. 3 ein Flußdiagramm für eine Lader-/Kupplungsregelstrategie bei Tempomatbetrieb. Bei gesetztem Tempomat wird bei steigender Fahrgeschwindigkeit $v_F$ und für den Fall einer Tempomat-Sollgeschwindigkeit $v_{TS}$ von mehr als 120 km/h die Laderkupplung K geschlossen. Falls $v_F$ steigt, aber $v_{TS}$ sinkt oder gleichbleibt, wird die Laderkupplung nicht beeinflußt. Falls $v_F$ gleichbleibt oder fällt und $v_{TS}$ größer als 110 km/h ist, wird die Laderkupplung nicht beeinflußt, andernfalls wird die Laderkupplung geöffnet. Zur Vermeidung von Ein- und Ausschaltrucken, das durch das Trägheitsmoment des mechanischen Laders 2 bedingt ist, wird somit erreicht, daß die Laderkupplung K während des Tempomatbetriebes oberhalb einer vorzugsweise hysteresebehafteten Geschwindigkeitsschwelle (unterschiedliche Vorgaben für $v_{TS}$ je nach Abfrageergebnis der Fahrgeschwindigkeit $v_F$) permanent geschlossen ist. Die Werte für $v_{TS}$ sind prinzipiell frei wählbar und können auch nach Abfrage von $v_F$ für beide Verzweigungsmöglichkeiten (steigende oder fallende Fahrgeschwindigkeit $v_F$) gleich groß sein.

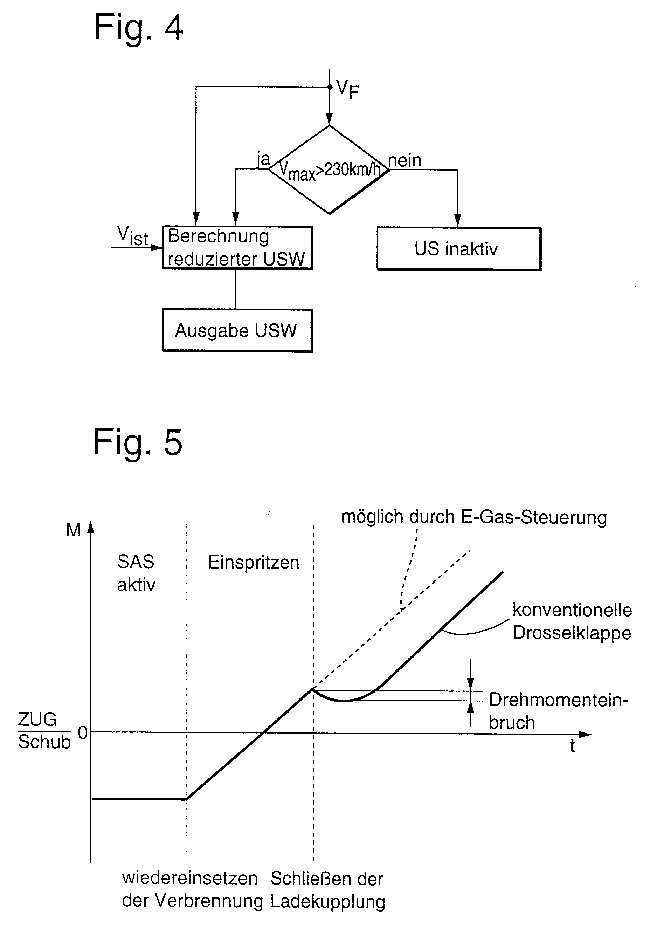

Fig. 4 zeigt ein Flußdiagramm für eine Steuerung eines Öffnungswinkels USW des Umluftstellers 18 bei einer Höchstgeschwindigkeitsregelung. Eine vorgebbare maximale Geschwindigkeit des Fahrzeuges (z.B. $v_{max}$ = 230 km/h) wird ausschließlich über den Öffnungswinkel USW des Umluftstellers 18 eingeregelt. Hierzu wird, sofern die Funktion aktiv ist, aus der Differenz zwischen der maximalen Geschwindigkeit $v_{max}$ und einer Ist-Geschwindigkeit $v_{ist}$ über einen Regelalgorithmus eine Stellgröße für den Lageregelkreis des Öffnungswinkels USW des Umluftstellers 18 berechnet.

Fig. 5 zeigt ein Diagramm des zeitlichen Verlaufs des Antriebsmomentes für das Zuschalten der Laderkupplung K beim Übergang von Schubabschaltung zu motorgetriebenen Fahrbetrieb. Um den Einschaltruck der Laderkupplung K beim Schubabschalten (SAS) zu minimieren, wird das Einschalten der Laderkupplung K erst nach dem Wiedereinsetzen der Verbrennung definiert aktiviert. Alternativ kann der Einschaltruck über eine stromgeregelte Endstufe für die Laderkupplung K oder bei Verwendung eines Drive-by-Wire-Systems über die definierte Beeinflussung des Drosselklappenwinkels erfolgen.

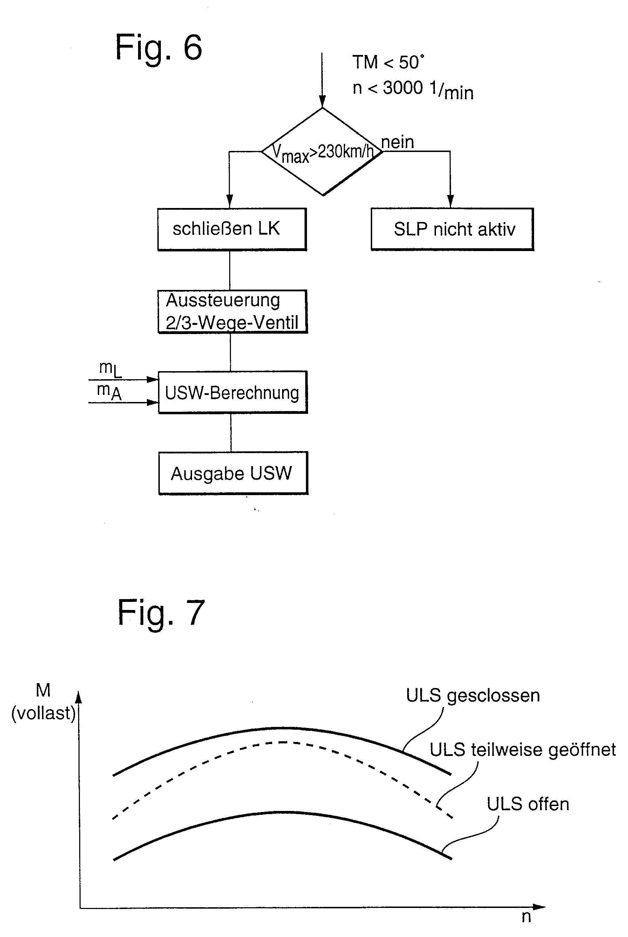

In Fig. 6 ist ein Flußdiagramm für eine Steuerung des Öffnungswinkels USW des Umluftstellers 18 bei Sekundärluftpumpenfunktion dargestellt. Die Steuerung des Sekundärluftmassenstromes $m_{SL}$ in der Verbindungsleitung 27 wird durch den feindosierbaren Umluftsteller 18 vorgenommen. Der Massenstrom $m_L$ durch den Lader 2 setzt sich zusammen aus dem Massenstrom $m_M$ durch die Brennkraftmaschine 1, dem Umluftmassenstrom $m_{UL}$ durch die Umluftleitung 16 und dem Sekundärluftmassenstrom $m_{SL}$ durch die Verbindungsleitung 27 ($m_L = m_M + m_{UL} + m_{SL}$). Die Bedingung für die Sekundärlufteinblasung in die Abgasleitung 15 ist, daß der Druck $p_2$ der Ladeluft hinter dem Lader 2 größer ist als der Abgasgegendruck $p_3$ in der Abgasleitung 15, wobei der Druck $p_2$ eine Funktion der durch den Umluftsteller 18 freigegebenen Fläche $A_{LS}$ in der Umluftleitung 16 ist. Weitere Bedingung ist, daß die Motortemperatur einen zuvor festgelegten Schwellwert (z.B. 50°C) und die Motordrehzahl n über einem gewissen Vorgabewert (z.B. 3000 1/min) liegt.

Nach Aktivierung der Sekundärluftpumpenfunktion (SLP-Funktion) wird das in der Sekundärluftleitung 27 integrierte Sekundärluftventil 29 (2/3-Wege-Ventil) aktiviert. Der für die SLP-Funktion notwendige Sauerstoffanteil im Abgasstrom wird über einen für den jeweiligen Betriebszustand der Brennkraftmaschine 1 definierten Überdruck LLD im Saugsystem (Drucksensor 30) realisiert, wobei ein jeweiliger Überdruck LLD einem in einem Kennfeld abgelegten bestimmten Öffnungsgrad USW des Umluftstellers 18 zugeordnet ist.

Für jeden Betriebspunkt der Brennkraftmaschine 1 ($m_L$ und $m_M$ sind konstant) kann der Sekundärluftmassenstrom $m_{SL}$ durch Variation des Umluftmassenstromes $m_{UL}$ und damit des Druckes $p_2$ optimiert werden. So kann im Motor-Steuergerät 28 in Abhängigkeit von Last (Drosselklappenwinkel), Drehzahl und Kühlwassertemperatur ein komplettes Kennfeld für die Stellung (z.B. Umluftklappenwinkel) des Umluftstellers 18 abgelegt werden. Durch die Langzeitadaption innerhalb des Stellgliedes für den Umluftsteller 18 (gelernte Anschläge werden im EEPROM abgelegt) ist ein stabiler Betrieb über die Motorlebensdauer möglich, da beispielsweise eine Verschmutzung des Stellgliedes erkannt und kompensiert wird.

Fig. 7 zeigt ein Diagramm für einen Antriebsmomentenverlauf M in Abhängigkeit von der Drehzahl n der Brennkraftmaschine 1 für geschlossenen und offenen Umluftsteller 18. Jede für einen Fahrdynamikeinfluß (z.B. Getriebeschutz, Anti-Schlupfregelung) zu realisierenden Momentenreduktion wird über den Öffnungsgrad USW des Umluftstellers 18 eingestellt. Als schnelle unterstützende Maßnahme kann ggf. eine Zurücknahme des Zündzeitpunktes in Richtung "spät" erfolgen.

In einem weiteren Beispiel (zeichnerisch nicht dargestellt) kann bei erkanntem Klopfen eines/mehrerer Zylinder in Abhängigkeit von der Zündzeitpunktverschiebung in Richtung "spät" der Öffnungsgrad USW des Umluftstellers 18 reduziert werden. Der aufgrund der Anti-Klopf-Regelung gebildete Wert für die Spätverstellung wird als Berechnungsgrundlage für einen reduzierten Öffnungsgrad USW des Umluftstellers 18 verwendet, wobei die Berechnung für den Öffnungsgrad USW entweder mit Hilfe eines arithmetisch gemittelten Wertes über alle Zylinder erfolgt oder bei einer adaptiven Anti-Klopf-Regelung mit Hilfe eines Wertes, der sich nach der Ansteuerung der adaptiven Werte und anschließendem erkannten Klopfen aktuell einstellt.

Desweiteren ist mit dem erfindungsgemäßen Verfahren auch eine Wirkungskettendiagnose möglich. Bei eingeschalteter Laderkupplung K und oberhalb eines frei zu bestimmenden Öffnungsgrades USW des Umluftstellers 18 wird die über den Luftmassenmesser 6 gemessene Luftmasse $m_L$ mit einer in einem Kennfeld abgelegten Luftmasse $m_{NL}$ für Normbedingungen im Saugbetrieb verglichen. Unterschreitet die Differenz-Luftmasse $m_D = m_L - m_{NL}$ einen frei zu bestimmenden Grenzwert, so wird auf defekten Laderkreis erkannt und ein entsprechendes Signal ausgegeben.

Aus einem Vergleich der gemessenen Luftmasse $m_L$ mit der normierten Luftmasse $m_{NL}$ ist auch die geodätische Höhe bestimmbar. Die normierte Luftmasse $m_{NL}$ (Normbedingungen) ist in zwei Kennfeldern abgelegt und zwar in einem Kennfeld für Saugbetrieb und in einem Kennfeld für den Laderbetrieb, wobei die Kennfelder über den Drosselklappenwinkel DKS und die Motordrehzahl n aufgespannt sind. Weichen die Umgebungsbedingungen von den normierten Bedingungen ab, so werden die ermittelten Umgebungsdaten zur Motorsteuerung 28 geleitet.

Zur Vermeidung von Saugrohr-Druckspitzen wird oberhalb einer definierten Drehzahlschwelle und eines definierten Drehzahlgradienten der Öffnungsgrad USW des Umluftstellers 18 aus dem Vollastpunkt (geschlossener Umluftsteller) um einen definierten Wert reduziert (Umluftsteller wird in teilweise geöffnete Stellung überführt). Bei Fahrzustandsübergängen "Zug" in "Schub" wird bei erkanntem Schließen des Leerlaufkontaktes LL der Umluftsteller 18 geöffnet, um somit den Aufbau von Druckspitzen in der Ladeluftleitung 3 zu vermeiden.

In einer bevorzugten Ausführung der Erfindung sind in dem Kraftfahrzeug alle oben geschilderten Funktionen implementiert und über die Motorsteuerung 28 steuerbar.

**Patentansprüche**

1. Verfahren zur Steuerung einer aufgeladenen Brennkraftmaschine eines Kraftfahrzeuges, die eine Motorsteuerung und einen Lader zur Förderung von Ladeluft umfaßt, wobei der Lader in Abhängigkeit von Betriebsparametern der Brennkraftmaschine über eine Kupplung zu-und abschaltbar ist und in einer Ladeluftleitung stromauf einer Drosselklappe und stromab des Laders eine Umluftleitung zur Saugseite des Laders abzweigt und in der Umluftleitung ein Umluftsteller angeordnet ist und wobei die Motorsteuerung eine Vielzahl von Sensorwerten über Leitungen erhält und verarbeitet, in Steuerdaten für den Betrieb der Brennkraftmaschine umwandelt und über Zuleitungen an diese weiterleitet,
   **dadurch gekennzeichnet,**
   daß über die Motorsteuerung (28) in Abhängigkeit von Betriebsparametern ($v_F$,$v_{TS}$,$k_s$,$m_L$,$n$,LL,$T_M$, LLD) der Brennkraftmaschine (1) und/oder des Kraftfahrzeuges der Umluftsteller (18) und/oder die Laderkupplung (K) mit vorgebbaren Werten für einen Öffnungsgrad (USW) des Umluftstellers (18) und/oder einen Schaltzustand (LK) der Laderkupplung (K) für vorgebbare unterschiedliche Betriebszustände der Brennkraftmaschine (1) angesteuert werden.

2. Verfahren nach Anspruch 1,
   **dadurch gekennzeichnet,**
   daß während eines Tempomatbetriebes des Kraftfahrzeuges die Laderkupplung (K) oberhalb einer vorgebbaren Geschwindigkeitsschwelle ($v_{TS}$) permanent geschlossen ist.

3. Verfahren nach Anspruch 1,
   **dadurch gekennzeichnet,**
   daß bei einem erkannten Klopfen eines/mehrerer Zylinder der Brennkraftmaschine (1) in Abhängigkeit einer Zündzeitpunktverschiebung in Richtung "spät" der Umluftsteller (18) geöffnet wird.

4. Verfahren nach Anspruch 1,
   **dadurch gekennzeichnet,**
   daß eine vorgebbare maximalen Fahrzeuggeschwindigkeit ($v_{max}$) über den Öffnungsgrad (USW) des Umluftstellers (18) eingeregelt wird, indem aus der Differenz zwischen der maximalen Fahrzeuggeschwindigkeit ($v_{max}$) und der Ist-Geschwindigkeit ($v_{ist}$) über einen Regelalgorithmus eine Stellgröße für einen Lageregelkreis des Öffnungsgrades (USW) des Umluftstellers (18) berechnet wird.

5. Verfahren nach Anspruch 1,
   **dadurch gekennzeichnet,**
   daß oberhalb einer vorgebbaren Drehzahlschwelle und eines vorgebbaren Drehzahlgradienten und bei erkanntem Schließen eines Leerlaufkontaktes (LL) der Umluftsteller (18) aus einer geschlossenen Position um einen vorbestimmbaren Wert geöffnet wird.

6. Verfahren nach Anspruch 1,
   **dadurch gekennzeichnet,**
   daß die Laderkupplung (K) nach einem Schubbetrieb der Brennkraftmaschine (1) erst nach dem Wiedereinsetzen der Verbrennung definiert geschlossen wird.

7. Verfahren nach Anspruch 1,

**dadurch gekennzeichnet,**
daß bei Brennkraftmaschinen (1) mit Sekundärlufteinblasung bei gewünschter Sekundärluftfunktion der Sauerstoffanteil im Abgasstrom über den Öffnungsgrad (USW) des Umluftstellers (18) steuerbar ist.

8. Verfahren nach Anspruch 1,
   **dadurch gekennzeichnet,**
   daß eine für eine Fahrdynamik-Steuerung zu realisierende Momentenreduktion über den Öffnungsgrad (USW) des Umluftstellers (18) eingestellt wird.

9. Verfahren nach Anspruch 1,
   **dadurch gekennzeichnet,**
   daß im Ladebetrieb der Brennkraftmaschine (1) oberhalb eines definierten Öffnungsgrades (USW) des Umluftstellers (18) eine gemessene Luftmasse ($m_L$) mit einer Referenz-Luftmasse ($m_{NL}$) für den Saugbetrieb verglichen wird und bei Unterschreiten einer bestimmten Differenz $m_D = m_L - m_{NL}$ der beiden Luftmassen ein defekter Ladekreis erkannt und angezeigt wird.

Fig. 1

$m_M$ $3$

$5$

$3$ $A_{LS}$

$6$ $R$

$KW$ $16a$ $18$ $m_{UL}$ $24$

$9$ $15$ $3b$ $16$

$K$ $23$ $19$

$31$ $20a$

$3a$ $16a'$

$10$ $P_2$

$30$ $2$ $21$ $22$

$11$ $13$ $14$ $27$ $m_L$

$8$ $3,16$

$7$ $P_3$ $17$ $25$ $26$

$4$ $12$ $m_{SL}$ $16,16b$ $20$

$SLV$ $LK$ $USW$

$27$ $29$

$ZZ$ $28$

$LLD$

$V_P$ $V_{TS}$ $k_s$ $n$ $\cdots$ $\cdots$

EP 0 761 955 A2

# Fig. 2

Eingänge                                          Ausgänge

$V_F$

$V_{TS}$

$k_S$

$m_L$

DKS,EGP

n

LL

$T_M$

$M_S$

LLD

Motorsteuerung

28

LK

USW

DIA

EGS

SLV

ZZ

# Fig. 3

Tempomat gesetzt

ja    $V_F$ steigt    nein

ja   $V_{TS}>120km/h$   nein        ja   $V_{TS}>110km/h$   nein

LK nicht beeinflußt

LK schließen

LK öffnen

# Fig. 4

$V_F$

$V_{max} > 230 km/h$   ja / nein

$V_{ist}$ → Berechnung reduzierter USW

US inaktiv

Ausgabe USW

# Fig. 5

M

möglich durch E-Gas-Steuerung

SAS aktiv   Einspritzen

konventionelle Drosselklappe

$\frac{ZUG}{Schub}$ 0

Drehmomentein-bruch

t

wiedereinsetzen der Verbrennung   Schließen der Ladekupplung

# Fig. 6

TM < 50°
n < 3000 1/min

$V_{max}$>230km/h — nein

schließen LK

SLP nicht aktiv

Aussteuerung
2/3-Wege-Ventil

$m_L$
$m_A$

USW-Berechnung

Ausgabe USW

# Fig. 7

M
(vollast)

ULS gesclossen

ULS teilweise geöffnet

ULS offen

n